# EUROPÄISCHE PATENTANMELDUNG

(11) **EP 4 757 327 A1**
(43) Veröffentlichungstag der Anmeldung: **10.06.2026**
(21) Anmeldenummer: 25216952.9
(22) Anmeldetag: 19.11.2025
(51) Int. Cl.: H04N 23/23, H04N 23/11, H04N 23/62

(54) **VERFAHREN ZUM ANZEIGEN WENIGSTENS EINES SPEZIFISCHEN BEREICHS IN EINEM WÄRMEBILD EINER WÄRMEBILDKAMERA**

(30) Priorität: 05.12.2024 DE 102024211630
(71) Anmelder: Robert Bosch GmbH, 70442 Stuttgart (DE)
(72) Erfinder: Meyer, Patrick, 70771 Leinfelden-Echterdingen (DE); Hutzler, Kilian, 70195 Stuttgart (DE); Saup, Tim, 70771 Leinfelden-Echterdingen (DE); Frank, Michael, 75015 Bretten (DE); Boettcher, Ina Sophie, 72226 Simmersfeld (DE); Rumberg, Axel, 76199 Karlsruhe (DE)

(57) **Zusammenfassung**

Die Erfindung betrifft ein Verfahren (100) zum Anzeigen wenigstens eines spezifischen Bereichs in einem Wärmebild einer Wärmebildkamera (1), umfassend:
- Bereitstellen (101) des Wärmebildes, wobei das Wärmebild aus einer Erfassung eines Wärmebildsensors (3) der Wärmebildkamera (1) resultiert,
- Empfangen (102) wenigstens einer Auswahlbedingung für den spezifischen Bereich in dem Wärmebild auf Basis einer Benutzereingabe,
- Erstellen (103) des spezifischen Bereichs auf Basis der empfangenen Auswahlbedingung,
- Bestimmen (104) einer Farbskala für den erstellten spezifischen Bereich auf Basis eines minimalen und eines maximalen Temperaturwerts, der in dem erstellten spezifischen Bereich in dem Wärmebild repräsentiert ist,
- Initiieren (105) einer Anzeige eines gemischten Bildes, wobei das gemischte Bild den erstellten spezifischen Bereich unter Verwendung der bestimmten Farbskala als Wärmebild und einen verbleibenden Bereich umfasst.
Ferner betrifft die Erfindung eine Wärmebildkamera, ein Computerprogramm, eine Vorrichtung sowie ein Speichermedium zu diesem Zweck.

## Beschreibung

Die Erfindung betrifft ein Verfahren zum Anzeigen wenigstens eines spezifischen Bereichs in einem Wärmebild einer Wärmebildkamera. Ferner betrifft die Erfindung eine Wärmebildkamera, ein Computerprogramm, eine Vorrichtung sowie ein Speichermedium zu diesem Zweck.

### Stand der Technik

Ein Wärmebild wird meist über einen gesamten erfassten Bildausschnitt eines Displays einer Wärmebildkamera dargestellt. Die damit assoziierte Farbskala beinhaltet im Normalfall alle Temperaturen des erfassten Bildausschnitts von einem Minimum bis zu einem Maximum. Der Bereich vom Temperaturminimum im Bild bis zum Temperaturmaximum wird als "Span" bezeichnet und die Farbskala wird linear aufgeteilt von der kältesten Temperatur bis zur wärmsten Temperatur. In aktuellen Wärmebildkameras gibt es weitere Modi zur Darstellung des Bildes. Beim Bild-in-Bild Modus wird im Display der Wärmebildkamera nur ein Teil des Bildes als Wärmebild dargestellt, der (umgebende) Rest ist das Bild einer visuellen Kamera, die heute in vielen Wärmebildkameras vorhanden ist. Der Bildausschnitt, der als Wärmebild dargestellt wird, ist vorher festgelegt, d.h. nicht vom Nutzer einstellbar. Der Span beinhaltet weiter alle Temperaturen, die im Gesamtbild vorhanden sind. Beim transparenten Modus wird "hinter" das gesamte Wärmebild das Bild der visuellen Kamera gelegt. Das wird als Alpha-Blending bezeichnet. Beim "Hotseeker"-Modus werden als Wärmebild nur Temperaturen ab einer vom Nutzer festzulegenden Temperatur dargestellt, alles andere wird als visuelles Bild dargestellt. Beim "Coldseeker"-Modus legt der Nutzer eine Temperatur fest, bis zu der das Bild als Wärmebild dargestellt wird, drüber wird das visuelle Bild angezeigt. In einem manuellen Modus kann der Temperatur-Span auch anpassbar sein, d.h. der Nutzer kann obere und untere Schwellen festlegen, ab denen das Bild nur noch einfarbig angezeigt wird. Nur für den Temperaturbereich dazwischen werden dann die in der Skala vorhanden Farben aufgeteilt.

### Offenbarung der Erfindung

Gegenstand der Erfindung ist ein Verfahren mit den Merkmalen des Anspruchs 1, ein Wärmebildkamera mit den Merkmalen des Anspruchs 10, ein Computerprogramm mit den Merkmalen des Anspruchs 11 sowie ein computerlesbares Speichermedium mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Wärmebildkamera, dem erfindungsgemäßen Computerprogramm sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Anzeigen wenigstens eines spezifischen Bereichs in einem Wärmebild einer Wärmebildkamera, umfassend:
- Bereitstellen des Wärmebildes, wobei das Wärmebild aus einer Erfassung eines Wärmebildsensors, beispielsweise ein Infrarot-Detektorarray, der Wärmebildkamera resultiert, wobei das Wärmebild synonym auch als Thermobild oder Infrarotbild bezeichnet und verstanden werden kann, was insbesondere analog auch für den Wärmebildsensor und die Wärmebildkamera gilt,
- Empfangen wenigstens einer Auswahlbedingung für den spezifischen Bereich in dem Wärmebild auf Basis einer Benutzereingabe,
- Erstellen des spezifischen Bereichs auf Basis der empfangenen Auswahlbedingung,
- Bestimmen einer Farbskala für den erstellten spezifischen Bereich auf Basis eines minimalen und eines maximalen Temperaturwerts, der in dem erstellten spezifischen Bereich in dem Wärmebild repräsentiert ist, wobei auch denkbar ist, dass für das Bestimmen der Farbskala dem minimalen und/oder dem maximalen Temperaturwert definierte Temperaturwerte hinzuaddiert und/oder abgezogen werden (vereinfacht ausgedrückt ist auch z.B. Min-x und Max+x oder auch Min+x und Max-x möglich, wobei x die definierten Temperaturwerte sind also bspw. 5°C),
- Initiieren einer Anzeige eines gemischten Bildes, beispielsweise auf einem Display der Thermokamera, wobei das gemischte Bild den erstellten spezifischen Bereich unter Verwendung der bestimmten Farbskala als Wärmebild und einen verbleibenden Bereich umfasst, wobei auch denkbar ist.

In anderen Worten bestimmt die Farbskala für den erstellten spezifischen Bereich die anzuzeigenden Farben. Durch das Verfahren gemäß der Erfindung kann ein benutzerdefiniertes Wärmebild erzeugt werden, das sich auf einen ausgewählten Bereich, d.h. den spezifischen Bereich, konzentriert und dessen Farbskala an die Temperaturen in diesem Bereich angepasst ist. Dieses Vorgehen ermöglicht insbesondere eine detailliertere Analyse des Wärmebildes in dem spezifischen Bereich und kann den Kontrast in diesem Bereich verbessern.

Es ist ferner denkbar, dass das Erstellen umfasst:
- Bestimmen von Farbinformationen und/oder Temperaturinformationen in dem Wärmebild für die empfangene wenigstens eine Auswahlbedingung.

Dadurch kann die Farbskala präzise an den spezifischen Bereich angepasst werden. Die Auswertung der Farbinformationen und Temperaturinformationen ermöglicht eine feine Abstimmung der Farbpalette auf die in diesem Bereich präsenten Temperaturen. Dies führt insbesondere zu einer verbesserten Darstellung der Temperaturdifferenzen innerhalb des spezifischen Bereichs.

Zudem ist im Rahmen der Erfindung denkbar, dass der verbleibende Bereich einer Graustufendarstellung eines entsprechenden Abschnitts des Wärmebildes entspricht. Dadurch kann erreicht werden, dass die Anzeige des gemischten Bildes eine klare Unterscheidung zwischen dem fokussierten spezifischen Wärmebildbereich und dem verbleibenden Bereich ermöglicht. Das eingeschränkte Farbspektrum der Graustufendarstellung im verbleibenden Bereich kann vorteilhaft den spezifischen Wärmebildbereich zusätzlich hervorheben und somit die visuelle Analyse unterstützen.

Optional kann es vorgesehen sein, dass das Verfahren ferner umfasst:
- Bereitstellen eines visuellen Bildes, wobei das visuelle Bild aus einer Erfassung eines Kamerasensors, insbesondere eines visuellen Kamerasensors, der Wärmebildkamera resultiert, wobei das Wärmebild und das visuelle Bild eine gleiche erfasste Szene repräsentieren,
wobei der verbleibende Bereich einem entsprechenden Abschnitt des visuellen Bildes entspricht und/oder wobei der spezifische Bereich nach Durchführung eines Alpha Blendings eine Überlagerung des Wärmebilds und des visuellen Bildes ist. Dadurch kann erreicht werden, dass die Anzeige des gemischten Bildes dem Benutzer ein verbessertes Verständnis der erfassten Szene ermöglicht. Die Kombination von Wärmebild und visuell aufgenommenem Bild bietet insbesondere eine umfassendere Darstellung, da sowohl Temperaturinformationen als auch visuelle Details angezeigt werden. Dies kann besonders hilfreich für Anwendungen sein, in denen es wichtig ist, beide Aspekte einer Szene zu betrachten.

Vorteilhaft ist es darüber hinaus, wenn im Rahmen der Erfindung die Benutzereingabe eine Eingabe auf einem Display, insbesondere einem berührungssensitiven Display, und/oder auf einem Bedienelement der Wärmebildkamera ist. Mit anderen Worten kann so dem Benutzer ermöglicht werden, den spezifischen Bereich in dem Wärmebild über verschiedene Eingabeaufforderungen wie einem Display, insbesondere einem berührungssensitiven Display, oder über Bedienelemente an der Wärmebildkamera zu definieren. Dies kann eine Flexibilität und Benutzerfreundlichkeit der Wärmebildkamera erhöhen.

Außerdem ist es von Vorteil, wenn die Auswahlbedingung ein Rechteck oder eine Freiform ist, wobei der spezifische Bereich einem Inhalt des Rechtecks oder der Freiform entspricht. Dadurch kann der Benutzer die gewünschte Region im Wärmebild präzise definieren. Die Flexibilität in der Auswahl des Bereichs ermöglicht insbesondere eine detailliertere Analyse von spezifischen Zonen und kann die Kontraste innerhalb des spezifischen Bereichs erhöhen. Dies führt zu einer effizienteren Visualisierung und Interpretation der Wärmebilder. Auch weitere Formen wie ein Kreis sind ebenfalls denkbar.

Es kann ferner möglich sein, dass die Auswahlbedingung wenigstens ein ausgewähltes Objekt ist, das in dem Wärmebild oder in dem visuellen Bild repräsentiert ist, wobei das Erstellen den folgenden Schritt umfasst:
- Detektieren von Grenzen des wenigstens einen ausgewählten Objekts in dem Wärmebild oder in dem visuellen Bild auf Basis einer Bilderkennung, insbesondere Segmentierung, wobei der spezifische Bereich einem Inhalt der detektierten Grenzen entspricht.

In anderen Worten kann der Benutzer hierbei wenigstens ein in dem Wärmebild oder dem visuellen Bild dargestelltes Objekt auswählen und auf Basis dieser Objektdarstellung wird der spezifische Bereich erstellt. Das Detektieren der Grenzen kann mit einem Segmentierungsalgorithmus oder beispielsweise auch mit einem Maschinenlernmodell durchgeführt werden. Auf diese Weise ist es möglich, dass der Benutzer die Wärmebilddarstellung auf ein oder mehrere bestimmte Objekte fokussiert und die Farbskala automatisch an die Temperaturen innerhalb dieses Objekts oder dieser Objekte angepasst wird. Dies ermöglicht beispielsweise eine detaillierte Analyse von spezifischen Elementen im Wärmebild. Die Bilderkennungstechnik kann eine intuitive und benutzerfreundliche Methode zur Auswahl des Bereichs darstellen, da der Benutzer einfach das wenigstens eine gewünschte Objekt auswählen kann.

In einer weiteren Möglichkeit kann vorgesehen sein, dass die Benutzereingabe eine manuelle oder automatische Fokussierung auf Basis des Wärmebildes und/oder des visuellen Bildes ist, wobei die Auswahlbedingung ein resultierender fokussierter Bereich ist, wobei das Erstellen den folgenden Schritt umfasst:
- Analysieren des resultierenden fokussierten Bereichs, um einen scharfen Bereich zu identifizieren, wobei der spezifische Bereich dem identifizierten scharfen Bereich entspricht.

Dadurch wird insbesondere erreicht, dass die Auswahl des Wärmebildbereichs präzise und auf den Fokus des Benutzers ausgerichtet ist. Die automatische oder manuelle Fokussierung ermöglicht es dem Benutzer beispielsweise, gezielt Bereiche hervorzuheben, die eine detaillierte Analyse erfordern.

Ein scharfer Bereich in einem Bild ist insbesondere ein Bereich, in dem Bilddetails klar und gut definiert sind. Dies bedeutet beispielsweise, dass Kanten, Texturen und feine Strukturen deutlich sichtbar sind und keine Unschärfe aufweisen. Schärfe kann beispielsweise durch eine Analyse von Gradienten im Bild gemessen werden. Gradienten beschreiben insbesondere, wie schnell sich die Intensitätswerte (Helligkeit) ändern. Ein hoher Gradient kann auf eine scharfe Kante hinweisen. Algorithmen wie der Sobel- oder Canny-Detektor können beispielsweise zur Kantenfindung verwendet werden. Der Laplacian ist ein zweiter Ableitungsoperator, der Kanten und Bereiche mit hohen Intensitätsänderungen identifiziert. Ein Bild mit vielen stark ausgeprägten Laplacian-Werten kann auf scharfe Bereiche hinweisen. Ein scharfer Bereich umfasst insbesondere eine größere Anzahl von hohen Ortsfrequenzen. Die Fourier-Transformation kann verwendet werden, um die Frequenzkomponenten eines Bildes zu analysieren. Ein Bild mit vielen hohen Ortsfrequenzkomponenten ist tendenziell insbesondere schärfer. Durch eine visuelle Inspektion kann festgestellt werden, ob ein Bereich feine Details und scharfe Kanten aufweist. Scharfe Bereiche neigen ferner dazu, höhere Kontrastunterschiede zwischen benachbarten Pixeln aufzuweisen.

Es können zur Analyse des resultierenden fokussierten Bereichs Algorithmen verwendet werden, die Textur- und Kanteninformationen analysieren. Ferner kann ein trainiertes Maschinenlernmodell verwendet werden, um scharfe und unscharfe Bereiche automatisch zu klassifizieren.

Es kann von Vorteil sein, wenn im Rahmen der Erfindung das Verfahren ferner umfasst:
- Ermitteln wenigstens eines weiteren spezifischen Bereichs in dem Wärmebild, der innerhalb des minimalen und des maximalen Temperaturwerts liegt, insbesondere auf Basis von Temperaturinformationen des Wärmebildes,
wobei im Rahmen des Initiierens der Anzeige des gemischten Bildes das gemischte Bild ferner den ermittelten wenigstens einen weiteren spezifischen Bereich unter Verwendung der bestimmten Farbskala als Wärmebild und einen entsprechend angepassten verbleibenden Bereich umfasst. In anderen Worten können so weitere spezifische Bereiche in dem gemischten Bild als Wärmebild dargestellt werden, die ebenfalls in dem Bereich zwischen dem minimalen und dem maximalen Temperaturwert des erstellten spezifischen Bereichs liegen. Der verbleibende Bereich wird vorzugsweise entsprechend der weiteren spezifischen Bereiche verkleinert.

Ebenfalls Gegenstand der Erfindung ist ein Wärmebildkamera, umfassend:
- Eine Vorrichtung zur Datenverarbeitung, die eingerichtet ist, das Verfahren gemäß der Erfindung auszuführen, wobei die Vorrichtung zur Datenverarbeitung beispielsweise eine integrierte Schaltung oder ein Mikroprozessor oder eine vergleichbare Vorrichtung ist,
- Ein Wärmebildsensor, beispielsweise eine Infrarot-Detektorarray, wobei der Wärmebildsensor zur Erfassung eines Wärmebildes ausgebildet ist,
- Ein Kamerasensor, insbesondere ein visueller Kamerasensor, wobei der Kamerasensor zur Erfassung eines visuellen Bildes ausgebildet ist,
- Ein Display, insbesondere ein berührungssensitives Display, und wenigstens ein Bedienelement, wobei das Display und/oder das wenigstens eine Bedienelement zur Erfassung einer Benutzereingabe ausgebildet sind, wobei das Display ferner zur Anzeige des gemischten Bildes ausgebildet ist.

Damit bringt die erfindungsgemäße Wärmebildkamera die gleichen Vorteile mit sich, wie sie ausführlich mit Bezug auf das erfindungsgemäße Verfahren beschrieben wurden.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. wenigstens ein Computer vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung einer Wärmebildkamera gemäß Ausführungsbeispielen der Erfindung,
- Fig. 2: eine schematische Darstellung einer Wärmebildkamera gemäß Ausführungsbeispielen der Erfindung,
- Fig. 3: eine schematische Visualisierung eines Verfahrens, einer Vorrichtung, eines Speichermediums sowie eines Computerprogramms gemäß Ausführungsbeispielen der Erfindung.

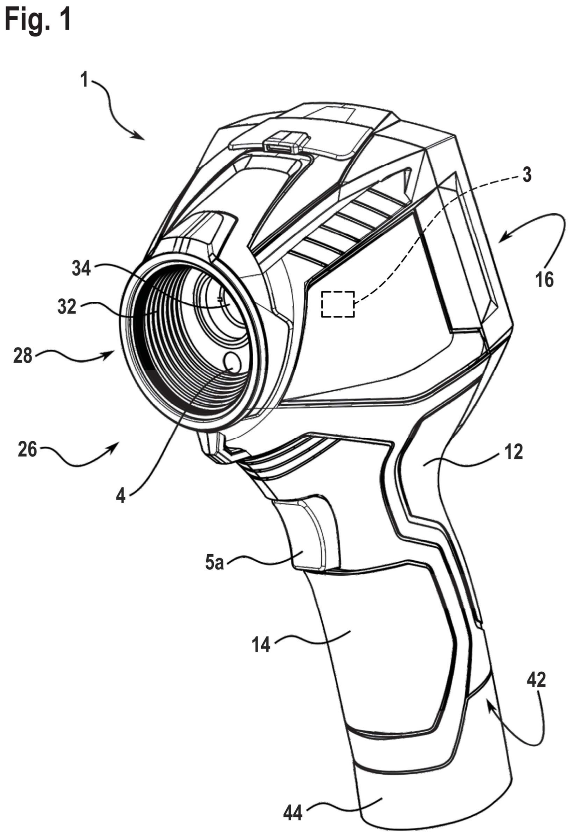

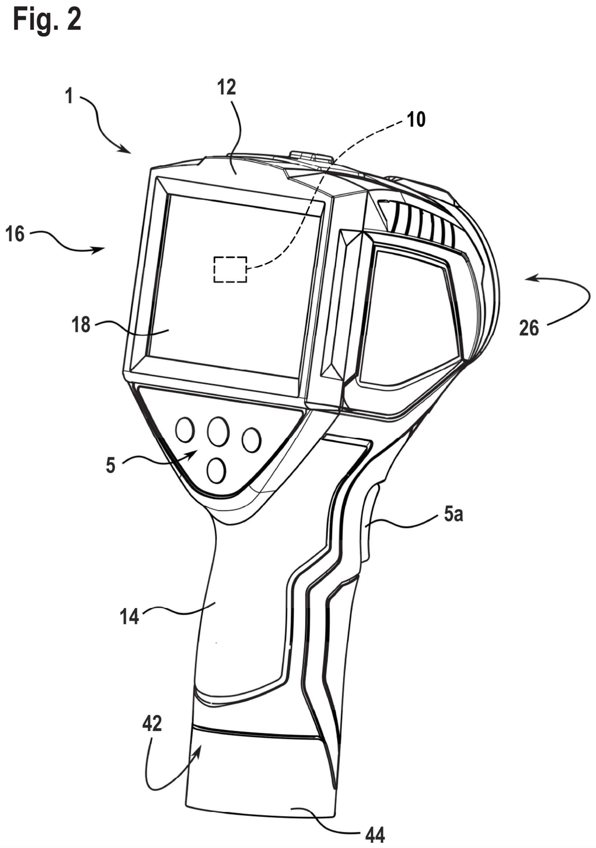

Im Folgenden mit Bezug zu Fig. 1 und Fig. 2 eine Wärmebildkamera 1 gemäß Ausführungsbeispielen der Erfindung, insbesondere in Form einer handgehaltenen Wärmebildkamera 1 beschrieben. Fig. 1 und Fig. 2 zeigen eine beispielhafte Ausführungsform dieser Wärmebildkamera 1 in perspektivischer Frontansicht bzw. in einer perspektivischen Rückansicht. Die Wärmebildkamera 1 umfasst ein Gehäuse 12 mit einem Griff 14. Mit dem Griff 14 kann die Wärmebildkamera 1 während ihrer Benutzung bequem in einer Hand gehalten werden. Das Gehäuse 12 der Wärmebildkamera 1 weist weiterhin auf einer einem Benutzer während der Benutzung der Wärmebildkamera 1 zugewandten Seite 16 eine Ausgabevorrichtung in Form eines Displays 18, insbesondere eines berührungssensitiven Displays 18, sowie Bedienelemente 5 zur Benutzereingabe und Steuerung der Wärmebildkamera 1 auf. Insbesondere weist die Wärmebildkamera 1 einen Trigger 5a auf, mit dem ein Benutzer eine kontaktfreie Ermittlung einer Temperatur einer zu untersuchenden Oberfläche eines Gegenstands, insbesondere eine Temperaturverteilung einer Oberfläche eines Gegenstands, auslösen kann.

Auf der einem Benutzer abgewandten Seite 26 des Gehäuses 12 ist eine Eintrittsöffnung 28 in dem Gehäuse 12 vorgesehen, durch die von dem Gegenstand 24 ausgestrahlte, insbesondere in einem Messbereich von einer Oberfläche 22 des Gegenstands 24 ausgestrahlte, Wärmestrahlung in die Wärmebildkamera 1 eintreten kann. Unmittelbar hinter der Eintrittsöffnung 28 befindet sich in einem Streulicht mindernden Lichttubus ein Linsensystem 34 als Optik. Das Linsensystem 34 ist für Strahlung im Infrarotbereich durchlässig und dient beispielsweise einer Fokussierung von Wärmestrahlung auf einen Wärmebildsensor 3, insbesondere ein Infrarot-Detektorarray, der Wärmebildkamera 1.

Auf der einem Benutzer während der Benutzung der Wärmebildkamera 1 abgewandten Seite 26 des Gehäuses 12 ist in einem Ausführungsbeispiel der Wärmebildkamera 1 ferner ein im visuellen Spektrum arbeitender Kamerasensor 4 vorgesehen, mittels dem ein visuelles Bild des Messbereichs aufgenommen werden kann. Dieses visuelle Bild kann gemeinsam mit einem aus einer von dem Benutzer initiierten Temperaturmessung generierten Wärmebild ausgegeben werden, insbesondere gemäß Ausführungsbeispielen der Erfindung zumindest teilweise mit dem Wärmebild überlagert oder überblendet als das gemischte Bild ausgegeben werden. Der Kamerasensor 4 kann beispielsweise als ein CCD-Bildsensor realisiert sein.

Auf der Unterseite der Wärmebildkamera 1 weist der Griff 14 eine Aufnahme 42 zur Aufnahme eines Energiespeichers 44 auf, der beispielhaft in Form eines aufladbaren Akkumulators oder in Form von Batterien ausgeführt sein kann.

Ferner umfasst die Wärmebildkamera 1 eine Vorrichtung 10 zur Datenverarbeitung wie schematisch in Fig. 2 dargestellt.

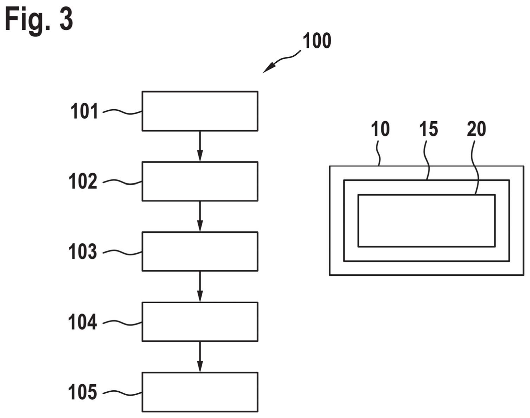

In Fig. 3 sind ein Verfahren 100, eine Vorrichtung 10, ein Speichermedium 15 sowie ein Computerprogramm 20 gemäß Ausführungsbeispielen der Erfindung schematisch dargestellt.

Fig. 3 zeigt insbesondere ein Ausführungsbeispiel für ein Verfahren 100 zum Anzeigen wenigstens eines spezifischen Bereichs in einem Wärmebild einer Wärmebildkamera 1. In einem ersten Schritt 101 wird das Wärmebild bereitgestellt, wobei das Wärmebild aus einer Erfassung eines Wärmebildsensors 3 der Wärmebildkamera 1 resultiert. In einem zweiten Schritt 102 wird wenigstens eine Auswahlbedingung für den spezifischen Bereich in dem Wärmebild auf Basis einer Benutzereingabe empfangen. In einem dritten Schritt 103 wird der spezifische Bereich auf Basis der empfangenen Auswahlbedingung erstellt. In einem vierten Schritt 104 wird eine Farbskala für den erstellten spezifischen Bereich auf Basis eines minimalen und eines maximalen Temperaturwerts, der in dem erstellten spezifischen Bereich in dem Wärmebild repräsentiert ist, bestimmt. In einem fünften Schritt 105 wird eine Anzeige eines gemischten Bildes initiiert, wobei das gemischte Bild den erstellten spezifischen Bereich unter Verwendung der bestimmten Farbskala als Wärmebild und einen verbleibenden Bereich umfasst.

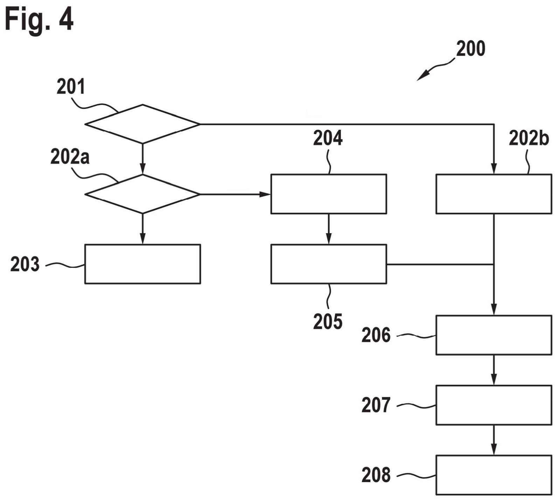

Fig. 4 zeigt ein Verfahren 200 gemäß Ausführungsbeispielen der Erfindung. In einem Schritt 201 wird insbesondere festgestellt, ob eine Benutzereingabe mittels des berührungssensitiven Displays 18 der Wärmebildkamera 1 erfolgt ist. Wenn nicht, wird gemäß Schritt 202 vorzugsweise ermittelt, ob eine Benutzereingabe in Form einer Fokussierung erfolgt ist. Wenn auch dies nicht der Fall ist, kann das Verfahren gemäß Schritt 203 beendet werden. Wenn die Benutzereingabe mittels des berührungssensitiven Displays 18 der Wärmebildkamera 1 erfolgt ist, wird gemäß Schritt 202b der spezifische Bereich vorzugsweise als ein Rechteck oder eine Freiform erstellt. Wenn die Benutzereingabe in Form der Fokussierung erfolgt ist, fokussiert der Benutzer insbesondere gemäß Schritt 204 einen gewünschten Bildbereich oder ein in dem Wärmebild dargestelltes Objekt. Anschließend kann gemäß Schritt 205 der spezifische Bereich gemäß der Erfindung als ein scharfer Bereich der Fokussierung erstellt werden. Gemäß Schritt 206 kann anschließend eine automatische Ermittlung eines minimalen und eines maximalen Temperaturwerts in dem spezifischen Bereich erfolgen. Anschließend kann gemäß Schritt 207 eine Farbskala auf einen Bereich zwischen dem minimalen und maximalen Temperaturwert beschränkt werden. Zuletzt kann gemäß Schritt 208 ein gemischtes Bild angezeigt werden, wobei das gemischte Bild den spezifischen Bereich unter Verwendung der Farbskala als Thermobild und einen verbleibenden Bereich als Graustufen-Thermobild oder als visuelles Bild umfasst.

Gemäß Ausführungsbeispielen der Erfindung kann der Bereich, der als Wärmebild dargestellt wird, durch einen Benutzer in einer Größe gewählt werden. D.h. im Gegensatz zum Bild-in-Bild Modus ist der Bereich, der als Wärmebild angezeigt wird, insbesondere adaptiv. Der Benutzer kann sich den anzuzeigenden Bereich also "maßschneidern". Zudem besteht beim Bild-in-Bild Modus gemäß dem Stand der Technik insbesondere das Problem, das ein Span, d.h. ein Bereich von einem minimalen bis zu einem maximalen Temperaturwert, weiterhin alle im gesamten Bild vorhandenen Temperaturen abdeckt, d.h. die Farbskala in dem Bild-in-Bild-Ausschnitt basiert insbesondere auf dem Span des gesamten Bildes. Gemäß Ausführungsbeispielen der Erfindung kann der Span auf den vom Benutzer gewählten spezifischen Bereich angepasst werden, d.h. die Farbskala umfasst insbesondere nur noch Temperaturen innerhalb des gewählten spezifischen Bereichs. Damit kann der gewählte spezifische Bereich vorteilhaft kontrastreicher dargestellt werden.

Mittels eines berührungssensitiven Displays 18 oder Bedienelementen 5 kann der Benutzer z.B. ein Rechteck zeichnen, in dem das Wärmebild angezeigt werden soll. Automatisch wird vorzugsweise anschließend die Farbskala an diesen Bereich angepasst, d.h. der kälteste und der wärmste Punkt werden vorzugsweise ermittelt und als Grenzen der Farbskala eingeführt. Der Rest des gemischten Bildes kann dann z.B. entweder als visuelles Bild dargestellt werden oder als grau abgestuftes Wärmebild. Zudem ist es möglich, durch Objekterkennung im visuellen Bild oder im Wärmebild den Bereich auf ein Objekt zu beschränken. Eine weitere Möglichkeit zur Festlegung des als Wärmebild dargestellten Bereichs besteht insbesondere darin, mittels einer fokussierbaren Optik einen bestimmten Bereich, der z.B. im Vordergrund liegt, scharfzustellen. Nur der "scharfe" Bereich würde dann vorzugsweise als Wärmebild dargestellt werden und die Farbskala kann wie oben beschrieben angepasst werden.

Gemäß einer Möglichkeit kann die Festlegung des spezifischen Bereichs demnach mittels eines berührungssensitiven Displays 18 oder Bedienelementen 5 erfolgen. Der Benutzer kann mittels des berührungssensitiven Displays 18 oder der Bedienelemente 5 ein Rechteck oder auch einen Freiformbereich festlegen, innerhalb dessen er das Wärmebild angezeigt haben möchte. Auch könnte es möglich sein, mittels Anwählens eines Objekts im visuellen oder Wärmebild den Bereich festzulegen. Der Benutzer klickt beispielsweise eine Darstellung eines Objekts auf dem berührungssensitiven Display 18 an und mittels Bilderkennung können Grenzen der Darstellung des Objekts detektiert werden. Der spezifische Bereich wird vorzugsweise auf diese Objektdarstellung beschränkt. Anschließend wird vorzugsweise automatisch ermittelt, welche Temperaturen in diesem Bildausschnitt vorhanden sind und die Farbskala wird dementsprechend eingegrenzt.

Gemäß einer weiteren Möglichkeit kann die Festlegung des spezifischen Bereichs mittels Fokussierung erfolgen. Die Voraussetzung hier ist insbesondere ein Vorhandensein einer fokussierbaren Optik, d.h. der Fokus muss vorzugsweise manuell oder automatisch einstellbar sein. Der Benutzer kann hier das Bild auf ein vom ihm gewähltes Objekt oder einen Bildbereich fokussieren. Dann wird insbesondere automatisch detektiert, wo das Bild scharf ist, und die Darstellung des Wärmebildes wird auf diesen scharfen Bereich beschränkt. Anschließend wird vorzugsweise automatisch ermittelt, welche Temperaturen in diesem Bildausschnitt vorhanden sind und die Farbskala wird dementsprechend eingegrenzt.

Gemäß einer weitere Möglichkeit kann eine Festlegung eines Temperaturbereichs durchgeführt werden. Der Benutzer kann bei dieser Alternative einen Ausschnitt aus dem Wärmebild auswählen. Aus diesem Ausschnitt werden vorzugsweise die maximale und die minimale Temperatur extrahiert. Im gemischten Bild werden anschließend vorzugsweise Ausschnitte, die innerhalb dieses Temperaturbereichs liegen, als Wärmebild dargestellt. Der Rest des Bildes wird vorzugsweise als Graustufendarstellung oder visuelles Bild dargestellt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Anzeigen wenigstens eines spezifischen Bereichs in einem Wärmebild einer Wärmebildkamera (1), umfassend:
- Bereitstellen (101) des Wärmebildes, wobei das Wärmebild aus einer Erfassung eines Wärmebildsensors (3) der Wärmebildkamera (1) resultiert,
- Empfangen (102) wenigstens einer Auswahlbedingung für den spezifischen Bereich in dem Wärmebild auf Basis einer Benutzereingabe,
- Erstellen (103) des spezifischen Bereichs auf Basis der empfangenen Auswahlbedingung,
- Bestimmen (104) einer Farbskala für den erstellten spezifischen Bereich auf Basis eines minimalen und eines maximalen Temperaturwerts, der in dem erstellten spezifischen Bereich in dem Wärmebild repräsentiert ist,
- Initiieren (105) einer Anzeige eines gemischten Bildes, wobei das gemischte Bild den erstellten spezifischen Bereich unter Verwendung der bestimmten Farbskala als Wärmebild und einen verbleibenden Bereich umfasst.

2. Verfahren (100) nach Anspruch 1,
**dadurch gekennzeichnet,**
**dass** das Erstellen (103) umfasst:
- Bestimmen von Farbinformationen und/oder Temperaturinformationen in dem Wärmebild für die empfangene wenigstens eine Auswahlbedingung.

3. Verfahren (100) nach Anspruch 1 oder 2,
**dadurch gekennzeichnet,**
**dass** der verbleibende Bereich einer Graustufendarstellung eines entsprechenden Abschnitts des Wärmebildes entspricht.

4. Verfahren (100) nach Anspruch 1 oder 2,
**dadurch gekennzeichnet,**
**dass** das Verfahren (100) ferner umfasst:
- Bereitstellen eines visuellen Bildes, wobei das visuelle Bild aus einer Erfassung eines Kamerasensors (4) der Wärmebildkamera (1) resultiert, wobei das Wärmebild und das visuelle Bild eine gleiche erfasste Szene repräsentieren,
wobei der verbleibende Bereich einem entsprechenden Abschnitt des visuellen Bildes entspricht und/oder wobei der spezifische Bereich nach Durchführung eines Alpha Blendings eine Überlagerung des Wärmebilds und des visuellen Bildes ist.

5. Verfahren (100) nach einem der vorhergehenden Ansprüche,
**dadurch gekennzeichnet,**
**dass** die Benutzereingabe eine Eingabe auf einem Display (18) und/oder auf einem Bedienelement (5) der Wärmebildkamera (1) ist.

6. Verfahren (100) nach Anspruch 5,
**dadurch gekennzeichnet,**
**dass** die Auswahlbedingung ein Rechteck oder eine Freiform ist, wobei der spezifische Bereich einem Inhalt des Rechtecks oder der Freiform entspricht.

7. Verfahren (100) nach Anspruch 5,
**dadurch gekennzeichnet,**
**dass** die Auswahlbedingung wenigstens ein ausgewähltes Objekt ist, das in dem Wärmebild oder in dem visuellen Bild repräsentiert ist, wobei das Erstellen (103) den folgenden Schritt umfasst:
- Detektieren von Grenzen des wenigstens einen ausgewählten Objekts in dem Wärmebild oder in dem visuellen Bild auf Basis einer Bilderkennung, insbesondere Segmentierung, wobei der spezifische Bereich einem Inhalt der detektierten Grenzen entspricht.

8. Verfahren (100) nach einem der vorhergehenden Ansprüche,
**dadurch gekennzeichnet,**
**dass** die Benutzereingabe eine manuelle oder automatische Fokussierung auf Basis des Wärmebildes und/oder des visuellen Bildes ist, wobei die Auswahlbedingung ein resultierender fokussierter Bereich ist, wobei das Erstellen (103) den folgenden Schritt umfasst:
- Analysieren des resultierenden fokussierten Bereichs, um einen scharfen Bereich zu identifizieren, wobei der spezifische Bereich dem identifizierten scharfen Bereich entspricht.

9. Verfahren (100) nach einem der vorhergehenden Ansprüche,
**dadurch gekennzeichnet,**
**dass** das Verfahren (100) ferner umfasst:
- Ermitteln wenigstens eines weiteren spezifischen Bereichs in dem Wärmebild, der innerhalb des minimalen und des maximalen Temperaturwerts liegt, insbesondere auf Basis von Temperaturinformationen des Wärmebildes,
wobei im Rahmen des Initiierens (105) der Anzeige des gemischten Bildes das gemischte Bild ferner den ermittelten wenigstens einen weiteren spezifischen Bereich unter Verwendung der bestimmten Farbskala als Wärmebild und einen entsprechend angepassten verbleibenden Bereich umfasst.

10. Wärmebildkamera (1), umfassend:
- Eine Vorrichtung (10) zur Datenverarbeitung, die eingerichtet ist, das Verfahren (100) nach einem der Ansprüche 1 bis 9 auszuführen,
- Ein Wärmebildsensor (3), wobei der Wärmebildsensor (3) zur Erfassung eines Wärmebildes ausgebildet ist,
- Ein Kamerasensor (4), wobei der Kamerasensor (4) zur Erfassung eines visuellen Bildes ausgebildet ist,
- Ein Display (18) und wenigstens ein Bedienelement (5), wobei das Display (18) und/oder das wenigstens eine Bedienelement (5) zur Erfassung einer Benutzereingabe ausgebildet sind, wobei das Display (18) ferner zur Anzeige des gemischten Bildes ausgebildet ist.

11. Computerprogramm (20), umfassend Befehle, die bei der Ausführung des Computerprogramms (20) durch wenigstens einen Computer (10) diesen veranlassen, das Verfahren (100) nach einem der Ansprüche 1 bis 9 auszuführen.

12. Computerlesbares Speichermedium (15), umfassend Befehle, die bei der Ausführung durch wenigstens einen Computer (10) diesen veranlassen, die Schritte des Verfahrens (100) nach einem der Ansprüche 1 bis 9 auszuführen.
